(19) Europäisches Patentamt
European Patent Office
Office européen des brevets

(11) **EP 3 557 532 A1**

(12) **EUROPEAN PATENT APPLICATION**

(43) Date of publication:
**23.10.2019  Bulletin 2019/43**

(51) Int Cl.:
***G06T 15/06*** (2011.01)       ***G06T 15/50*** (2011.01)

(21) Application number: **18305490.7**

(22) Date of filing: **20.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **THOMSON LICENSING**
**92130 Issy les Moulineaux (FR)**

(72) Inventors:
• **SOURIMANT, Gaël**
  **35576 Cesson-Sévigné (FR)**

• **LECOCQ, Pascal**
  **35576 Cesson-Sévigné (FR)**
• **HIRTZLIN, Patrice**
  **35576 Cesson-Sévigné (FR)**
• **TARIOLLE, François-Louis**
  **35576 Cesson-Sévigné (FR)**

(74) Representative: **Vidon Brevets & Stratégie**
**16B, rue de Jouanet**
**BP 90333**
**35703 Rennes Cedex 7 (FR)**

(54) **DEVICE AND METHOD FOR SCENE RENDERING WITH A DEPTH-OF-FIELD EFFECT**

(57)      A 3D scene is rendered on an image grid with a depth-of-field effect associated with a focus plane and corresponding to a virtual camera viewpoint having a camera aperture area. In this respect, a partial geometric representation of the 3D scene from a rasterization pass is obtained, and a radiance is integrated at each pixel of the image grid over the camera aperture area from rays converging at focus points of the focus plane and having ray intersections obtained from the partial geometric representation of the 3D scene. Integrating the radiance is effected by ray marching, relying on adaptive ray steps decreasing in a neighborhood of the focal plane.

Figure 1

**Description**

**1. Technical field**

The invention relates to the domain of image rendering in computer graphics, including depth-of-field effects. It is more particularly directed to GPU real-time rendering (Graphics Processing Unit).

In the present disclosure, the term "rendering" refers broadly to the conversion of geometry and material data into visual images.

**2. Background art**

Depth-of-field is a camera effect that refers to a range of distance that appears acceptably sharp on a shot. Any object located before or behind this range appears more or less blurry, depending on parameters such as camera aperture, focus distance and focal length. This effect is commonly used in cinematography and computer generated images to catch the attention of the spectator by focusing on objects or characters at a given distance, leaving the foreground or background blurry.

Nevertheless, in real-time rendering, existing techniques still present visual artefacts and/or require costly computing without providing high-quality representation of camera depth-of-field effects.

**3. Summary**

The present disclosure relates to a device for rendering a 3D scene on an image grid having a depth-of-field effect associated with a focus plane and corresponding to a virtual camera viewpoint having a camera aperture area, said device comprising at least one processor configured for:

obtaining a partial geometric representation of the 3D scene from a rasterization pass,
integrating a radiance at each pixel of the image grid over the camera aperture area from rays converging at focus points of the focus plane and having ray intersections obtained from said partial geometric representation of the 3D scene,
wherein integrating said radiance is effected by ray marching, said ray marching relying on adaptive steps on each of said rays decreasing in a neighborhood of the focus plane.

The present disclosure thus proposes a new and inventive solution for the rendering of a 3D scene with depth-of-field effects, overcoming at least one of the above-mentioned shortcomings. In particular, the general principle of the disclosure relies on the application of an adaptive ray marching on the rays traced for the application of a path tracing process.

**4. List of figures**

The present disclosure will be better understood, and other specific features and advantages will emerge upon reading the following description of particular and non-restrictive illustrative embodiments, the description making reference to the annexed drawings wherein:

- Figure 1 is a flow chart illustrating the main steps of a method for rendering a 3D scene according to an embodiment of the disclosure;
- Figure 2a illustrates an example of the depth-of-field principle;
- Figure 2b illustrates an example of simulation of depth-of-field in case of thin-lens camera model;
- Figure 3a and 3b are example of the rendering of a 3D scene using respectively linear ray marching according to state of the art and adaptive ray marching according to an embodiment of the disclosure;
- Figure 3c illustrates an ex of a power function used for the determination of the adaptive ray marching according to an embodiment of the disclosure;
- Figures 4a and 4b represent some ray marching rays respectively with the same start sample positions and using starting random offset, for a pixel, according to two variants of an embodiment of the disclosure;
- Figures 5a and 5b are example of the rendering of a 3D scene according respectively to the two variants of figure 4a and 4b;
- Figure 6 represents an overview of the screen-space depth-of-field technique according to an embodiment of the disclosure;
- Figures 7a and 7b illustrate two examples of hit point resolution, respectively for a vertical surface and an inclined surface, according to two variants of an embodiment of the disclosure;

- Figure 8 illustrates an example of hit point resolution in case of occlusion according to an embodiment of the disclosure;
- Figures 9a and 9b are block diagrams respectively of a device implementing the method for rendering a 3D scene and an apparatus embodying a device according to an embodiment of the disclosure.

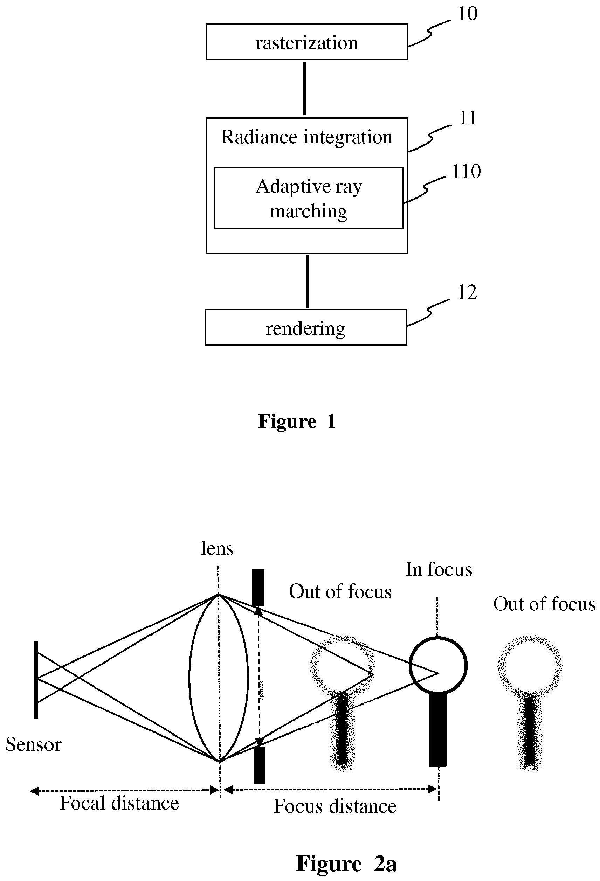

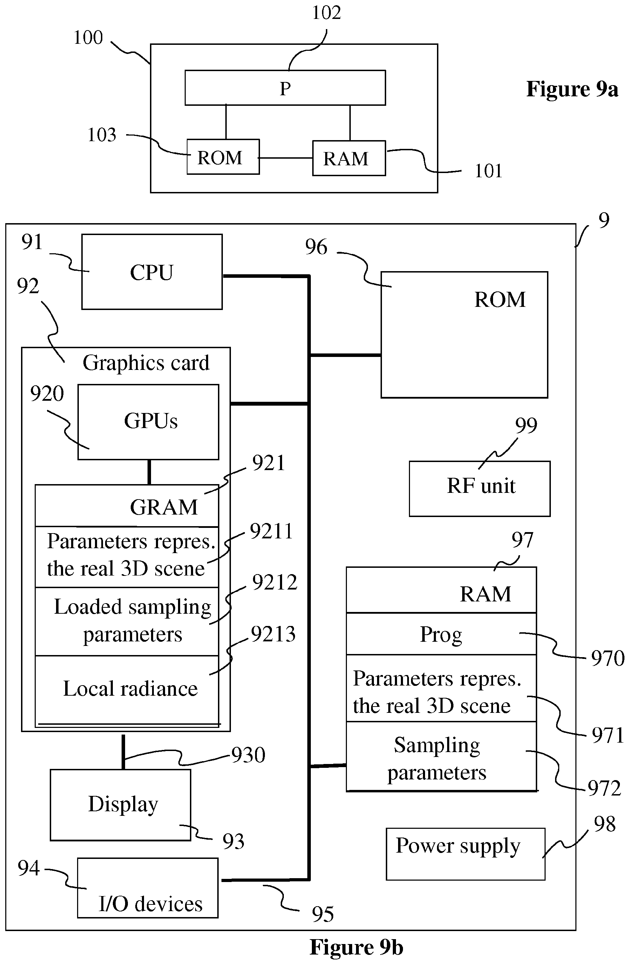

In Figures 1, 9a and 9b, the represented blocks are purely functional entities, which do not necessarily correspond to physically separate entities. Namely, they could be developed in the form of software, hardware, or be implemented in one or several integrated circuits, comprising one or more processors.

## 5. Detailed description of embodiments

The present disclosure will be described in reference to a particular functional embodiment of device 100 configured for executing a method for rendering a 3D scene on an image grid having a depth-of-field effect associated with a focus plane and corresponding to a virtual camera viewpoint having a camera aperture area, by implementing a specific path tracing process, as illustrated on **Figure 1.**

The device 100, illustrated on **figure 9a** and described in more details later, is advantageously an apparatus, or a physical part of an apparatus, designed, configured and/or adapted for performing the mentioned functions and producing the mentioned effects or results. In alternative implementations, the device 100 is embodied as a set of apparatus or physical parts of apparatus, whether grouped in a same machine or in different, possibly remote, machines.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 100.

The present disclosure thus proposes a new and inventive solution for the rendering of a 3D scene with accurate depth-of-field effects, overcoming at least one of the above-mentioned shortcomings. In particular, the general principle of the disclosure relies on the application of an adaptive ray marching on the rays traced for the application of a path tracing process.

More specifically, the present disclosure borrows production path tracing techniques for accurate simulation of depth-of-field camera effects whatever the lens system complexity.

Indeed, cameras use lens systems to focus light coming from a scene onto a photometric sensor. Due to shape and refractive properties of the lens, light rays emanating from a point at a focus distance converge to a single point ideally located at a sensor plane focal distance, as illustrated on **Figure 2a.** Any point placed behind or below this focus distance diverges, spreading incoming light energy over the sensor and causing blurry image effects. The size of this spread is commonly referred to as a circle of confusion.

In computer graphics, path tracing algorithm consists in tracing rays from sensor cells to collect incoming luminance through a volume sustained by the camera lens and controlled by the camera aperture.

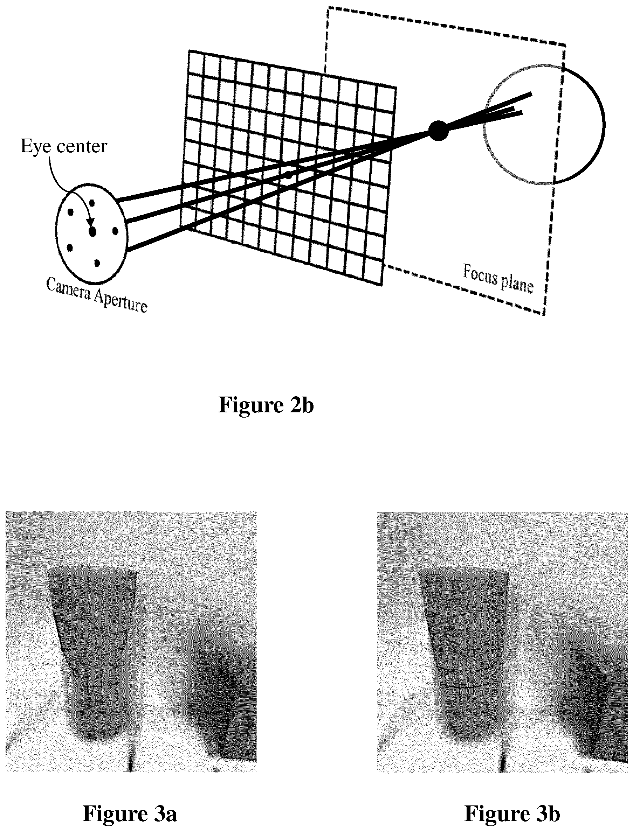

In the case of a thin-lens camera model associated with a focus plane, the method works as illustrated on **figure 2b** and as follows: for each pixel, the incoming radiance is estimated by tracing rays, also named rays "DOF" for "Depth-Of-Field", through a conic volume, the cross section of which is controlled by the camera aperture and focusing at a focus point (inside the focus plane) along the ray from the eye (located at the center of the camera aperture plane) to the pixel.

The main steps of the method for rendering a 3D scene according to an embodiment of the disclosure are illustrated in **Figure 1.**

First of all, the device 100 obtains a partial geometric representation of the 3D scene from executing a single view rasterization pass in block 10 so as to output the per-pixel information: at least depth buffer, color buffer and potentially additional data as object identifier, also called object ID. Thus, the whole 3D scene is rasterized from a single camera viewpoint using a conventional pinhole camera model.

Then, in block 11, the device 100 executes the instructions of the depth-of-field processing step on a per-pixel basis so as to integrate a radiance at each pixel of the image grid. This depth-of-field processing step is based on an adaptive ray marching (block 110) in the eye space, i.e. considering a unique virtual camera viewpoint, so as to find intersections with the depth buffer and thus obtain 3D scene rendering data.

Finally, in block 12, the device 100 outputs 3D scene rendering data through its adapted output.

According to this embodiment of the disclosure, the partial geometric representation of the 3D scene obtained during the rasterization pass 10 is stored in output buffers (typically a depth buffer), that are referred to as *G-buffers,* or *z-buffers.* Thus, during the rasterization path, per-pixel information is generated and recorded into one or several output buffers, containing at least a depth information and a color information, and potentially an object ID information for better precision, as will be explained in more details below.

Then, the partial geometric representation previously obtained is used by the device 100 for integrating a radiance at each pixel of the image grid over the camera aperture area. This can be done from said rays converging at focus points of the focus plane and having ray intersections obtained from said partial geometric representation of the 3D scene.

Thus, the depth-of-field processing according to the present disclosure operates on the previously obtained output buffers (*G-buffers* or *z-buffers*) and works on a per-pixel basis. For each pixel, the focus point F along a single camera view ray on the focus plane is determined. With a given camera aperture, this corresponds to integrating, for each pixel P, the incoming radiance over a disc from the focus point $F_P$, as follow:

$$L(P) = \frac{1}{A} \int_A L\left(x, \omega_{x \to F_P}\right) dx \approx \frac{1}{N} \sum L\left(x_i, \omega_{x_i \to F_P}\right) \qquad \text{(Equation 1)}$$

wherein A is the aperture disk area, L a radiance measure, x a point sample in the aperture disk and $\omega_{x \to F_P}$ represents a ray going from w to the associated focus point.

Following a known Monte-Carlo integration scheme, the integral is estimated by summing the incoming luminance at random sample location $x_i$ uniformly distributed over the aperture domain.

However, according to the present disclosure, an adaptive screen-space ray marching 110 is effected to estimate each $L(x_i)$ sample. Indeed, this adaptive screen-space ray marching 110 leverages the partial geometric representation 3D scene previously obtained and stored in the output buffers to quickly retrieve the closest surface intersected by a ray and get the radiance estimate.

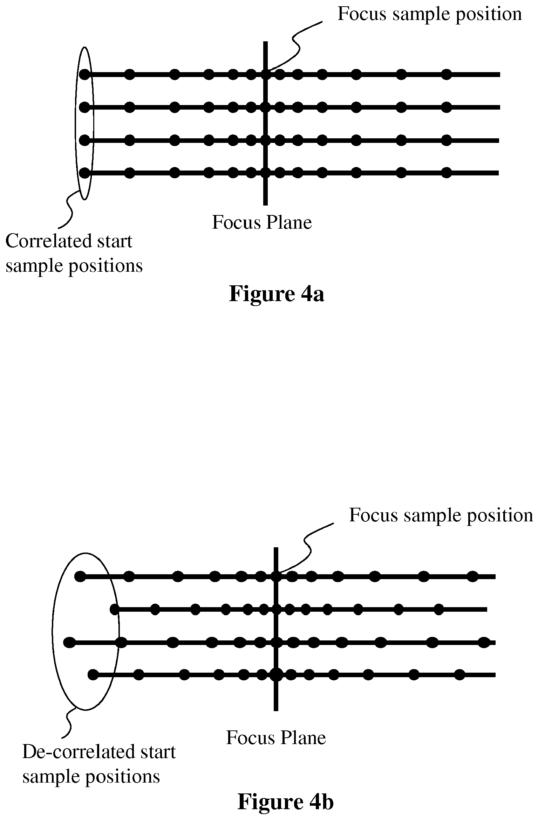

More precisely, the adaptive screen-space ray marching according to this embodiment relies on adaptive steps on each of said rays decreasing in a neighborhood of the focus plane, as illustrated on **figure 4a** and described in more details below.

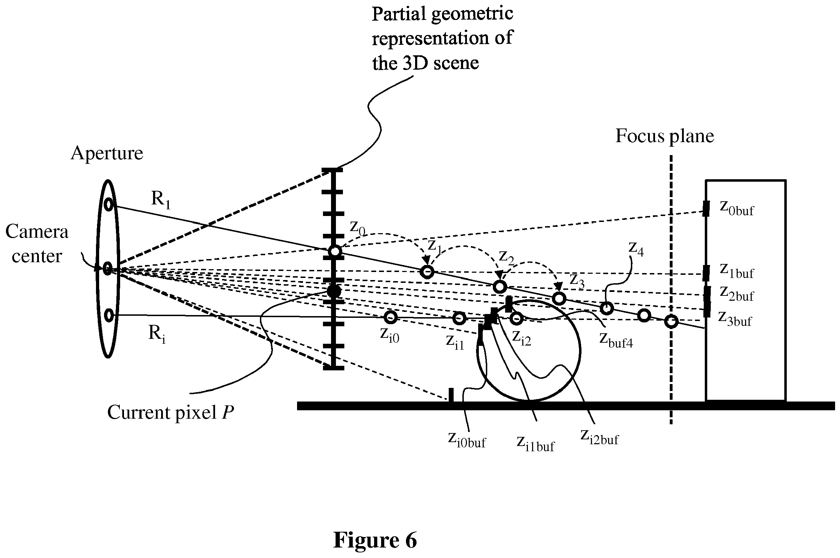

First, the general principle of the screen-space ray marching is the following: given a ray in the 3D space, the idea is to march along the ray step by step at predetermined positions until a surface is hit. At each step, the 3D ray sample position is projected into the 2D screen space and the corresponding depth information is read from the *z-buffer.* If the ray depth at the step position i is beyond the scene depth read from the *z-buffer,* then an intersection is likely to happen and the color information of the surface hit is retrieved from the color buffer. This general principal is illustrated on **figure 6,** for a particular embodiment of the present disclosure, and is described in more details below.

However, the adaptive screen-space ray marching effected according to the present disclosure avoids costly intersection tests with the scene for each ray "depth-of-field" sample and allows to accurately resolve the intersections combined with an adaptive sampling strategy to evenly cover the integration domain and increase the accuracy near the focus plane. Indeed, when an object enters in the focus range, the lack of precision of the marching steps, if equally spaced, is likely to miss important sharp details and cause visual artefacts, as illustrated on **figure 3a.**

With the adaptive steps that increase the sampling rate near the focus plane during the ray marching, the present disclosure allows to overcome these artifacts without downgrading the performance, as illustrated on **figure 3b.**

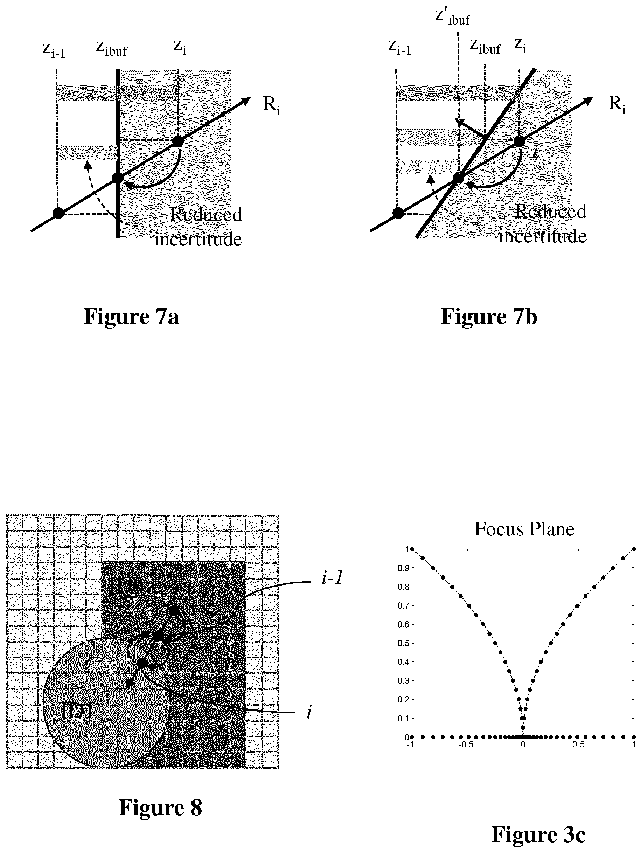

For example, such sampling distribution of the steps for ray marching can be obtained by mean of a power function of a distance to the focus plane, as illustrated on **figure 3c.**

Thus, according to a particular aspect of the present disclosure, the depth-of-field rays are random rays, for example based on regular samples of the camera aperture area that are evenly distributed over the camera aperture area. This allows minimizing the variance of the integral estimate of the Equation 1 and can be provided by using a low-discrepancy random sequence based on the known Hammersley point set. Such a distribution of regular sample of the camera aperture is for example illustrated on **figure 2b,** with samples evenly distributed around the eye center.

Moreover, to prevent the apparition of structured noise, and as the human visual system is also a "radiance integrator", samples within a block of pixels need to be evenly distributed across the integration domain. To that end, said random rays are based on de-correlated samples of the camera aperture area resulting from shifting said regular samples. As a result, the de-correlated samples of the camera aperture area correspond to different per-pixel sample sets. For example, a known Cranley-Patterson de-correlation technique is used, based on random 2D shifts of the original point set to generate different per-pixel sample sets. Thus, the sample sets are not the same for two adjacent pixels.

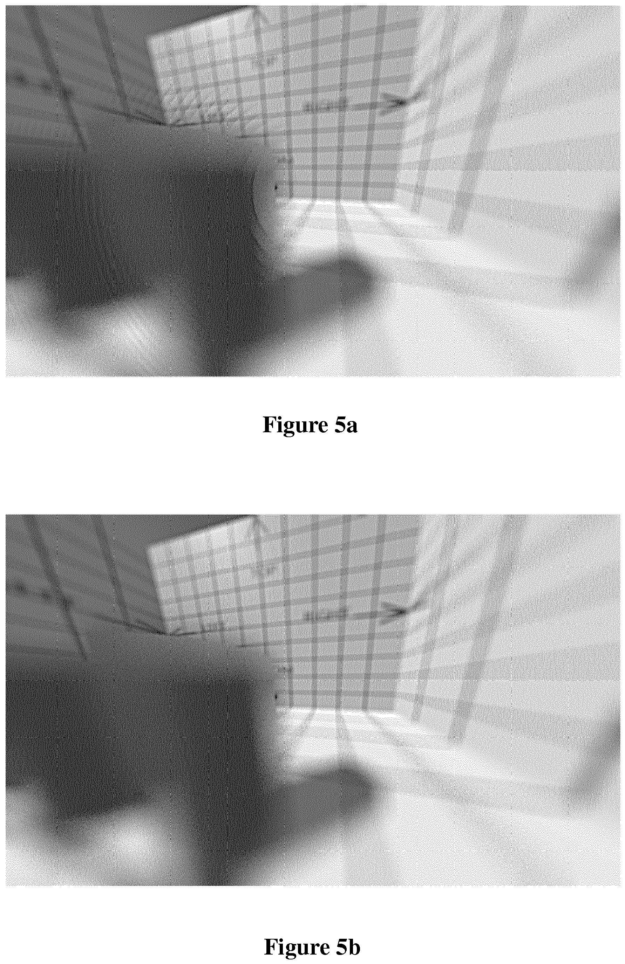

However, on a pixel basis, ray marching at the same positions for all the rays, as illustrated on **figure 4a,** introduces radial correlation artefacts, as can be seen on **figure 5a,** that appear as color banding (highly correlated values on neighboring pixels).

Thus, according to a particular embodiment, the sample positions of the rays are de-correlated between the rays, for a pixel, so as to evenly distribute these positions within the volume of integration sustained by the aperture, as illustrated on **figure 4b.**

For example, given that a sample position along each of said rays corresponds to each adaptive ray step, the sample positions include, for each ray, a focus sample position lying on the focus plane, as illustrated on **figures 4a and 4b.**

Moreover, as already said, the sample positions of the adaptive steps, for a pixel, are decreasing from the camera aperture to the focus plane.

To obtain de-correlated rays, on a per-pixel basis, the sample positions also include, for each ray, a start sample position closest to the image grid towards the focus plane. Then, a random starting offset for the ray marching is applied on each ray so that the sample positions of the rays are de-correlated between the rays, for a pixel, as illustrated on **figure 4b.**

Using this starting random offset, the visual banding artefacts are suppressed, as illustrated on **figure 5b** compared to figure 5a.

Thus, the parameters, i.e. the sample positions or steps along the rays for adaptive ray marching, are now determined and are used for the next step of the depth-of-field process, i.e. integrating a radiance for each pixel of the image grid by hit point resolution.

As already said, for a given ray, a surface hit is detected when the depth $z_i$ of a sample position along the ray is greater than the *z-buffer* value $z_{i_{buf}}$ stored at corresponding screen space location, i.e. on the partial geometric representation obtained. Thus, the intersection point lies in the z-range range $[z_{i-1}, z_i]$ along the ray. By considering the point lying in the plane at the distance $z_{i_{buf}}$ as the final hit point, the domain of incertitude for the intersection is considerably reduced and the accuracy of the intersection is considerably improved according to the present disclosure.

This can be illustrated in **figure 6,** representing an example of the present screen-space depth-of-field technique, wherein two objects, a spherical object in front of a rectangular object, pertain to a 3D scene, in the case of a thin lens camera. The current pixel *P* for which the radiance is to be integrated corresponds to a point on the spherical object and only two random rays $R_1$ and $R_i$ have been represented, for purpose of clarity. However, more than fifteen rays can be used so as to increase the accuracy of the rendering.

First, it can be seen that, for the pixel *P*, the steps, or sample positions, on the two rays $R_1$ and $R_i$ are de-correlated, as the start sample positions are not the same for $R_1$ and $R_i$. This can be seen for example by comparing the positions $z_0$ and $z_{i0}$ in relation with the camera aperture.

Moreover, it can also be seen that the steps are decreasing in a neighborhood of the focus plane, for both rays $R_1$ and $R_i$.

For the first three steps, or sample positions, along the first ray $R_1$, the three depth values $z_0$ to $z_3$ are lower than the respective *z-buffer* values $z_{i_{buf}}$ ($z_{0_{buf}}, z_{1_{buf}}, z_{2_{buf}}$) stored at corresponding screen space location. It is to be noted that those *z-buffer* values $z_{i_{buf}}$ ($z_{0_{buf}}, z_{1_{buf}}, z_{2_{buf}}$) correspond to depth values of the rectangular object. However, the fourth depth value $z_4$ is greater than the $z_{4_{buf}}$ value, thus indicating that a surface is hit. At this stage, the color value corresponding to this depth value $z_{4_{buf}}$ is kept for the radiance integration, indeed corresponding to a depth value of the spherical object.

Regarding now the ray $R_i$, for the first two steps, or sample positions, along this ray $R_i$, the two depth values $z_{i0}$ to $z_{i1}$ are lower than the respective *z-buffer* values $z_{i_{buf}}$ ($z_{i0_{buf}}, z_{i1_{buf}}$) stored at corresponding screen space location. It is to be noted that those *z-buffer* values $z_{i_{buf}}$ ($z_{i0_{buf}}, z_{i1_{buf}}$) correspond to depth values of the spherical object. However, the third depth value $z_{i3}$ is greater than the $z_{i3_{buf}}$ value, thus indicating that a surface is hit. At this stage, the color value corresponding to this depth value $z_{4_{buf}}$ is kept for the radiance integration, indeed corresponding to a depth value of the spherical object.

Thus, by applying this adaptive ray marching process on the plurality of rays (not illustrated), a radiance is integrated for each pixel, by retrieving the color information from the color buffer corresponding to the depth buffer.

In a variant of the present embodiment, given that the normal is stored in an additional buffer (in addition to the depth and the color in the *G-buffer*) for a pixel, the adaptive ray marching can take advantage of this value to further improve the hit point resolution for highly inclined surfaces.

This is illustrated on **figures 7a** and **7b**. More precisely, the **figure 7a** illustrates the case wherein the surface hit, with the corresponding depth value $z_{i_{buf}}$, corresponds to a vertical surface. Here, the intersection incertitude is reduced by considering the point on the ray lying in the plane $z = z_{i_{buf}}$.

On the **figure 7b** however, the hit surface corresponds to a very inclined surface, and with the use of the additional normal information, the intersection precision is improved, by considering the point on the ray lying in the plane $z = z'_{i_{buf}}$, and not the point on the ray lying in the plane $z = z_{i_{buf}}$ as would be without the use of the normal information.

In another variant of the present embodiment, to further increase the intersection precision and reduce the single view artefacts, due to the unique point of view considered for the rasterization pass, a strategy is to keep track of the object IDs during the adaptive ray marching process to predict intersections in occluded regions.

Indeed, the single view rasterization does not guarantee accurate screen-space intersection resolution for sample rays emanating away from the view center. As illustrated in **figure 8,** there are situations where the hit point, on the rectangular surface (with an object ID corresponding to ID0 on **figure 8**), is occluded by an object, here the spherical object (with an object ID corresponding to ID1 on **figure 8**), resulting in potential erroneous intersections.

To detect such occlusions and avoid misleading intersections, an object ID buffer is used, in addition to the *G-buffer* and potentially the normal information, that assigns for each pixel a unique ID per visible object. This ID buffer is rasterized during the single view rasterization pass previously described by means of a known "pixel shader program".

Indeed, by keeping track of the object ID at the current and the previous steps in ray marching along a ray, occlusion situations are detected according to the following algorithm. When a hit is detected, i.e. when $z_i$ is greater than $z_{ibuf}$, two cases are identified, depending on the value of the object ID:

- If the object ID at position $i$ is the same as the object ID at position $i-1$, i.e. $ID_i = ID_{i-1}$, an intersection is predicted at position $i$ and the previously described process is implemented so as to integrate a radiance for the current pixel;
- If, on contrary, the object ID at position i is different from the object ID at position $i-1$, i.e. $ID_i \neq ID_{i-1}$, it is to be interpreted as an occlusion i.e. the ray of ray marching is occluded by an object corresponding to the object $ID_i$.

In this second case, when an occlusion is detected, the intersection is considered as being behind the "occluder" object and with a high probability on the object tracked prior to the occlusion event. As a result, the intersection is predicted at the position position $i-1$.

Finally, according to another variant aiming to enforce the prediction of the intersections, still additional information can enhance the buffers issued from the rasterization pass. Such additional information refers to screen-space derivative information that can be used as a first order approximation to extrapolate the hit color at the position $i$ from the derivatives stored at the position $i-1$. Indeed, these derivatives can be used to store color, normal or object ID variations for each pixel and thus improve the accuracy of the prediction of intersections.

As described above according to an embodiment of the disclosure, the main steps of the method for rendering a 3D scene on an image grid having a depth-of-field effect are:

- A scene rasterization step to output the per-pixel information: depth buffer, color buffer, and potentially additional data as for example object ID.
- A depth-of-field processing step on a per-pixel basis based on a ray marching in the eye space to find an intersection with the depth buffer, said ray marching using:

  ○ adaptive sampling strategy to be more accurate near the focus plane;
  ○ per-ray random starting point offset to avoid stepping across rays; and
  ○ according to variants, using additional normal information and/or additional object ID information along the ray marching for predictive intersection resolution.

Those features improve the accuracy of camera depth-of-field using a single rasterization pass and allow rendering a 3D scene with depth-of-field effects based on real optical camera effects close to the cinematographic production level. Moreover, those features can model complex focus effects based on distance fields.

Finally, those features are easy to implement on graphics hardware, and for example on top of existing game engine. Indeed, those features are advantageously implemented in a GPU shader or a computing kernel.

Referring now to **Figure 9a,** we illustrate the structural blocks of an exemplary device 100 that can be used for implementing the method for rendering a 3D scene according to at least one embodiment of the disclosure.

In an embodiment, a device 100 for implementing the disclosed method comprises a non-volatile memory 103 (e.g. a read-only memory (ROM) or a hard disk), a volatile memory 101 (e.g. a random access memory or RAM) and a processor 102. The non-volatile memory 103 is a non-transitory computer-readable carrier medium. It stores executable program code instructions, which are executed by the processor 102 in order to enable implementation of the method described above in its various embodiments.

Upon initialization, the aforementioned program code instructions are transferred from the non-volatile memory 103 to the volatile memory 101 so as to be executed by the processor 102. The volatile memory 101 likewise includes registers for storing the variables and parameters required for this execution.

Finally, a particular apparatus 9, visible on **Figure 9b,** is embodying the device 100 described above. It corresponds for example to a personal computer (PC), a laptop, a tablet, a smartphone or a games console - such as a specialized games console producing and displaying images live. The apparatus 9 comprises the following elements, connected to each other by a bus 95 of addresses and data that also transports a clock signal:

- a microprocessor 91 (or CPU) ;
- a graphics card 92 comprising several Graphical Processor Units (or GPUs) 920 comprising a device 100 for rendering a 3D scene on an image grid having a depth-of-field effect, and a Graphical Random Access Memory (GRAM) 921;
- a non-volatile memory of ROM type 96;
- a RAM 97;
- one or several I/O (Input/Output) devices 94 such as for example a keyboard, a mouse, a joystick, a webcam; other modes for introduction of commands such as for example vocal recognition are also possible;
- a power source 98; and
- a radiofrequency unit 99.

The apparatus 9 also comprises a display device 93 of display screen type directly connected to the graphics card 92 to display synthesized images calculated and composed in the graphics card, for example live. The use of a dedicated bus to connect the display device 93 to the graphics card 92 offers the advantage of having much greater data transmission bitrates and thus reducing the latency time for the displaying of images composed by the graphics card. According to a variant, a display device is external to apparatus 9 and is connected thereto by a cable or wirelessly for transmitting the display signals. The apparatus 9, for example the graphics card 92, comprises an interface for transmission or connection adapted to transmit a display signal to an external display means such as for example an LCD or plasma screen or a video-projector. In this respect, the RF unit 99 can be used for wireless transmissions.

It is noted that the word "register" used in the description of memories 921, 96, and 97 designates in each of the memories mentioned, both a memory zone of low capacity (some binary data) as well as a memory zone of large capacity (enabling a whole program to be stored or all or part of the data representative of data calculated or to be displayed). Also, the registers represented for GRAM 921 can be arranged and constituted in any manner, and each of them does not necessarily correspond to adjacent memory locations and can be distributed otherwise (which covers notably the situation in which one register includes several smaller registers).

When switched-on, the microprocessor 91 loads and executes the instructions of the program contained in the RAM 97.

The random access memory 97 comprises notably:

- in a register 970, the operating program of the microprocessor 91 responsible for switching on the apparatus 9,
- in a register 971, parameters representative of the scene (for example modeling parameters of the object(s) of the scene, lighting parameters of the scene);
- in a register 972, sampling parameters for adaptive ray marching.

The algorithms implementing the steps of the method specific to the present disclosure and described above are stored in the memory GRAM 921 of the graphics card 92 associated with the apparatus 9 implementing those steps. When switched on and once the parameters 971 are loaded into the RAM 97, the graphic processors 920 of graphics card 92 load those parameters into the GRAM 921 and execute the instructions of those algorithms in the form of microprograms of "shader" type using HLSL (High Level Shader Language) language or GLSL (OpenGL Shading Language) for example.

The random access memory GRAM 921 comprises notably:

- in a register 9211, the parameters representative of the scene,
- in a register 9212, the loaded sampling parameters for adaptive ray marching,
- in a register 9213, local radiance computed in the frame of the rendering operations.

According to a variant, at least some of the data are stored in the RAM 97 and processed by the microprocessor 91. This variant however causes greater latency time in the composition of an image comprising a representation of the environment composed from microprograms contained in the GPUs 920 as the data must be transmitted from the graphics card to the random access memory 97 passing by the bus 95, for which the transmission capacities are generally inferior to those available in the graphics card for transmission of data from the GPUs 920 to the GRAM 921 and vice-versa.

According to another variant, the power supply 98 is external to the apparatus 9.

On the ground of the present disclosure and of the detailed embodiments, other implementations are possible and within the reach of a person skilled in the art without departing from the scope of the invention. Specified elements can notably be interchanged or associated in any manner remaining within the frame of the present disclosure.

The present description illustrates the principles of the present disclosure. It will thus be appreciated that those skilled in the art will be able to devise various arrangements that, although not explicitly described or shown herein, embody the principles of the disclosure and are included within its spirit and scope.

According to an embodiment, the random rays are based on de-correlated samples of the camera aperture area resulting from shifting the regular samples, the de-correlated samples of the camera aperture area corresponding to different per-pixel sample sets.

According to an embodiment, given that a sample position along each of the rays corresponds to each adaptive ray step, the sample positions include a focus sample position lying on the focus plane.

Moreover, given that that the sample positions include for each of the rays a start sample position closest to the image grid towards the focus plane, the start sample positions are offset so that the sample positions of the rays are de-correlated between the rays, for a pixel.

According to a feature of the disclosure, the adaptive ray steps are decreasing as a power function of a distance to the focus plane.

According to an embodiment, the partial geometric representation includes depth data.

According to an embodiment, given that the partial geometric representation includes information on surface normal vectors, the at least one processor is configured for obtaining the ray intersections by considering surface inclinations by using the surface normal vectors.

According to an embodiment, given that the partial geometric representation includes object identifiers and any of the ray intersections corresponding to a current sample position of at least one of the rays associated with one of the object identifiers, the at least one processor is configured for keeping the current sample position for the any of the ray intersections when a preceding sample position of the at least one of the random rays closer to the image grid is associated with the one of the object identifiers, and for selecting the preceding sample position for the any of the ray intersections when the preceding sample position is associated with another of the object identifiers than the one of the object identifiers.

According to an embodiment, the device comprises at least one output adapted to output 3D scene rendering data, obtained from integrating the radiance, at at least one output based on integrating the radiance.

In addition, the disclosure also relates to a GPU or Graphics Processing Unit comprising at least one processor adapted to create images from 3D scene rendering data, at least one frame buffer adapted to store the created images and at least one output to a display adapted to provide the created images from the at least one frame buffer to the display, characterized in that the GPU comprises a device for rendering as previously described.

In addition, the disclosure relates to a method for rendering a 3D scene on an image grid having a depth-of-field effect associated with a focus plane and corresponding to a virtual camera viewpoint having a camera aperture area, the method comprising:

- obtaining a partial geometric representation of the 3D scene from a rasterization pass,
- integrating a radiance at each pixel of the image grid over the camera aperture area from rays converging at focus points of the focus plane and having ray intersections obtained from the partial geometric representation of the 3D scene,

wherein integrating the radiance is effected by ray marching, the ray marching relying on adaptive ray steps decreasing in a neighborhood of the focus plane.

According to an embodiment, the method is executed by a device for rendering as previously described.

In addition, the disclosure relates to a computer program for rendering a 3D scene, comprising software code adapted to perform steps of a method compliant with any of the above execution modes when the program is executed by a processor.

The present disclosure further pertains to a non-transitory program storage device, readable by a computer, tangibly embodying a program of instructions executable by the computer to perform a method for rendering a 3D scene compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The terms "adapted" and "configured" are used in the present disclosure as broadly encompassing initial configuration, later adaptation or complementation of the present device, or any combination thereof alike, whether effected through material or software means (including firmware).

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared. Moreover, explicit use of the term "processor" should not be construed to refer exclusively to hardware capable of executing software, and refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM memory. Instructions may be notably stored in hardware, software, firmware or in any combination thereof.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

**Claims**

1. A device for rendering a 3D scene on an image grid having a depth-of-field effect associated with a focus plane and corresponding to a virtual camera viewpoint having a camera aperture area, said device comprising at least one processor configured for:

   - obtaining a partial geometric representation of the 3D scene from a rasterization pass,
   - integrating a radiance at each pixel of the image grid over the camera aperture area from rays converging at focus points of the focus plane and having ray intersections obtained from said partial geometric representation of the 3D scene, **characterized in that** integrating said radiance is effected by ray marching, said ray marching relying on adaptive steps on each of said rays decreasing in a neighborhood of the focus plane.

2. A method for rendering a 3D scene on an image grid having a depth-of-field effect associated with a focus plane and corresponding to a virtual camera viewpoint having a camera aperture area, said method comprising:

   - obtaining a partial geometric representation of the 3D scene from a rasterization pass,
   - integrating a radiance at each pixel of the image grid over the camera aperture area from rays converging at focus points of the focus plane and having ray intersections obtained from said partial geometric representation of the 3D scene,

   **characterized in that** integrating said radiance is effected by ray marching, said ray marching relying on adaptive ray steps decreasing in a neighborhood of the focus plane.

3. The device according to claim 1 or the method according to claim 2, **characterized in that** said rays are random rays.

4. The device according to claim 3 or the method according to claim 3, **characterized in that** said random rays are based on regular samples of the camera aperture area that are evenly distributed over the camera aperture area.

5. The device according to claim 4 or the method according to claim 4, **characterized in that** said random rays are based on de-correlated samples of the camera aperture area resulting from shifting said regular samples, said de-correlated samples of the camera aperture area corresponding to different per-pixel sample sets.

6. The device according to anyone of claims 1 or 3 to 5 or the method according to any one of claims 2 to 5, **characterized in that** a sample position along each of said rays corresponding to each adaptive ray step, said sample positions include a focus sample position lying on the focus plane.

7. The device according to claim 6 or the method according to claim 6, **characterized in that** said sample positions including for each of said rays a start sample position closest to the image grid towards said focus plane, said start sample positions are offset so that the sample positions of the rays are de-correlated between the rays, for a pixel.

8. The device according to anyone of claims 1 or 3 to 7 or the method according to any one of claims 2 to 7, **characterized in that** the adaptive ray steps are decreasing as a power function of a distance to the focus plane.

9. The device according to any one of the claims 1 or 3 to 8 or the method according to any one of claims 2 to 8, **characterized in that** said partial geometric representation includes depth data.

10. The device according to any one of claims 1 or 3 to 9 or the method according to any one of claims 2 to 9, **characterized in that** the partial geometric representation including information on surface normal vectors, said at least one processor is configured for obtaining said ray intersections by considering surface inclinations by using said surface normal vectors.

11. The device according to any one of claims 1 or 3 to 10 or the method according to any one of claims 2 to 10, **characterized in that** the partial geometric representation including object identifiers and any of said ray intersections corresponding to a current sample position of at least one of said rays associated with one of said object identifiers, said at least one processor is configured for keeping said current sample position for said any of said ray intersections when a preceding sample position of said at least one of said random rays closer to the image grid is associated with said one of said object identifiers, and for selecting said preceding sample position for said any of said ray intersections when said preceding sample position is associated with another of said object identifiers than said one of said object identifiers.

12. The device according to any one of claims 1 or 3 to 11, **characterized in that** said device comprises at least one output adapted to output 3D scene rendering data, obtained from integrating said radiance, at at least one output based on integrating said radiance.

13. The method according to any one of claims 2 to 11, **characterized in that** said method comprises outputting 3D scene rendering data, obtained from integrating said radiance, at least one output based on integrating said radiance.

14. A GPU or Graphics Processing Unit comprising at least one processor adapted to create images from 3D scene rendering data, at least one frame buffer adapted to store said created images and at least one output to a display adapted to provide said created images from said at least one frame buffer to said display, **characterized in that** said GPU comprises a device for rendering compliant with any of claims 1 to 11.

15. A computer program for rendering a 3D scene, comprising software code adapted to perform steps of a method compliant with claim 13 or 14 when the program is executed by a processor.

**Figure 1**

**Figure 2a**

**Figure 2b**

**Figure 3a**

**Figure 3b**

Focus sample position

Focus Plane

Correlated start
sample positions

**Figure 4a**

Focus sample position

Focus Plane

De-correlated start
sample positions

**Figure 4b**

Figure 5a

Figure 5b

**Figure 6**

**Figure 7a**

**Figure 7b**

**Figure 8**

**Figure 3c**

100

102

P — 102

103

ROM

RAM — 101

**Figure 9a**

9

91

CPU

92

96

ROM

Graphics card

920

GPUs

921

GRAM

9211
Parameters repres. the real 3D scene

9212
Loaded sampling parameters

9213
Local radiance

99

RF unit

97

RAM

Prog — 970

Parameters repres. the real 3D scene — 971

Sampling parameters — 972

98

Power supply

930

Display

93

94

I/O devices

95

**Figure 9b**

Europäisches
Patentamt

European
Patent Office

Office européen
des brevets

# EUROPEAN SEARCH REPORT

**Application Number**

EP 18 30 5490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Laurent Belcour, Cyril Soler, Kartic Subr, Nicolas Holzschuch, Fredo Durand: "5D covariance Tracing for Efficint Defocus and Motion Blur", ACM Transactions on Graphics, 16 November 2012 (2012-11-16), XP002784706, Retrieved from the Internet: URL:http://maverick.inria.fr/Members/Laurent.Belcour/covariance-tracing/covariance-tracing.pdf * abstract * * * page 14, left-hand column, paragraph 2 * | 1-15 | INV. G06T15/06 G06T15/50 |
| A | KUN ZHOU, ZHONG REN, STEPHEN LIN, HUJUN BAO, BAINING GUO, HEUNG-ZEUNG SHUM: "Real-Time Smoke Rendering Using Compensated Ray Marching", ACM TRANSACTIONS ON GRAPHICS, vol. 27, no. 3, 36, 1 August 2008 (2008-08-01), pages 36:1-36:12, XP002784707, * abstract * * | 1-15 | |
| A | US 2016/148415 A1 (YU ZHAN [US]) 26 May 2016 (2016-05-26) * abstract * * | 1-15 | TECHNICAL FIELDS SEARCHED (IPC) G06T |
| A | WO 2008/147999 A1 (PIXAR [US]; COOK ROBERT [US]) 4 December 2008 (2008-12-04) * abstract * * | 1-15 | |

The present search report has been drawn up for all claims

| Place of search | Date of completion of the search | Examiner |
|---|---|---|
| Berlin | 13 September 2018 | González Arias, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

## EP 3 557 532 A1

### ANNEX TO THE EUROPEAN SEARCH REPORT
### ON EUROPEAN PATENT APPLICATION NO.

EP 18 30 5490

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2018

| Patent document cited in search report | Publication date | Patent family member(s) | Publication date |
|---|---|---|---|
| US 2016148415 A1 | 26-05-2016 | NONE | |
| WO 2008147999 A1 | 04-12-2008 | GB 2460994 A | 23-12-2009 |
| | | GB 2483386 A | 07-03-2012 |
| | | WO 2008147999 A1 | 04-12-2008 |

EPO FORM P0459

For more details about this annex : see Official Journal of the European Patent Office, No. 12/82